# EUROPÄISCHE PATENTSCHRIFT

(11) **EP 1 516 759 B1**
(45) Veröffentlichungstag und Bekanntmachung des Hinweises auf die Patenterteilung: **07.05.2008**
(21) Anmeldenummer: 04021694.7
(22) Anmeldetag: 13.09.2004
(51) Int. Cl.: B60H 1/00

(54) **Fahrzeug-Klimatisierungsvorrichtung**
Motor vehicle air conditioning device
Dispositif de climatisation de véhicule automobile

(30) Priorität: 18.09.2003 DE 10343695
(43) Veröffentlichungstag der Anmeldung: 23.03.2005
(73) Patentinhaber: Behr GmbH & Co. KG, 70469 Stuttgart (DE)
(72) Erfinder: Klingler, Dietrich, Dipl.-Ing., 73540 Heubach (DE); Otto, Jürgen, Dipl.-Ing. (FH), 75428 Illingen (DE); Schmadl, Dieter, Dipl.-Ing., 71672 Marbach (DE)
(74) Vertreter: Grauel, Andreas

(56) Entgegenhaltungen:
- EP-A- 0 281 457
- EP-A- 1 502 783
- DE-A1- 2 856 031
- DE-A1- 3 401 039
- DE-A1- 19 540 020
- DE-A1- 19 960 851
- DE-U1- 9 420 222
- FR-A- 2 782 295
- US-A- 3 170 509
- US-A- 5 934 988

## Beschreibung

Die Erfindung betrifft ein Fahrzeug-Klimatisierungssystem mit einem zur Aufnahme klimatechnischer Komponenten, insbesondere eines Kältemittelverdampfers, vorgesehenen Klimagerät-Gehäuse gemäß US 3 170 509.

In Fahrzeugen, insbesondere Personenkraftwagen, sind Klimageräte häufig unterhalb der Instrumententafel angeordnet. Das Gehäuse des Klimagerätes ist dabei typischerweise an der Stirnwand des Fahrzeugs, gegebenenfalls auch an einem Querträger, befestigt. Hierfür sind Befestigungselemente erforderlich, die hohen Anforderungen bezüglich Festigkeit, Schwingungsisolation und Toleranzausgleich genügen. Diese mechanischen Anforderungen bedingen einen aufwendigen Aufbau der Klimatisierungsvorrichtung mit einer Vielzahl an Einzelkomponenten, einem hohen Gewicht sowie einem hohen Fertigungs- und Montageaufwand. Relevant ist weiterhin der erhebliche Platzbedarf des Klimageräts unterhalb der Instrumententafel. Ferner sind im dem Klimagerät benachbarten Bereich der Stirnwand Durchbrüche insbesondere für die Energie- und Medienversorgung des Klimageräts vorzusehen, welche zu einem erhöhten Geräuschniveau im Fahrzeuginnenraum führen. Aus diesem Grund wird in der Regel versucht, Anzahl und Größe der Durchbrüche in der Stirnwand möglichst gering zu halten.

Der Erfindung liegt die Aufgabe zugrunde, eine Fahrzeug-Klimatisierungsvorrichtung anzugeben, welche sich bei kompaktem, Gewicht sparenden Aufbau durch eine besondere Montagefreundlichkeit auszeichnet.

Diese Aufgabe wird erfindungsgemäß gelöst durch eine Fahrzeug-Klimatisierungsvorrichtung mit den Merkmalen des Anspruchs 1. Hierbei bildet ein Klimagerät-Gehäuse, welches zumindest einen Teil der klimatechnischen Komponenten, insbesondere Kältemittelverdampfer, aufnimmt, einen tragenden Teil einer Fahrzeug-Stirnwand, welche zu diesem Zweck einen entsprechend groß dimensionierten Durchbruch aufweist. Durch die Substitution eines Teiles der Fahrzeugstirnwand durch das Gehäuse oder zumindest einen Teil des Gehäuses des Klimagerätes ist die Klimatisierungsvorrichtung sowohl Raum als auch Gewicht sparend aufgebaut. Zugleich ist eine einfache Montage des vorzugsweise als Modul vorgefertigten Klimagerätes im Fahrzeug ermöglicht. Das als tragendes Teil ausgebildete Klimagerät-Gehäuse übernimmt insbesondere die Funktion eines Querträgers, welcher üblicherweise parallel zur Stirnwand im Fahrzeug angeordnet ist.

Sofern der Einbau eines gesonderten, insbesondere als Metallprofil ausgebildeten, zumindest annähernd parallel zur Stirnwand anzuordnenden Querträgers vorgesehen ist, ist dieser vorzugsweise in das Klimagerät-Gehäuse integriert und wird in besonders rationeller Weise zusammen mit diesem in das Fahrzeug eingebaut.

In besonders Raum sparender Weise ist mindestens eine klimatechnische Komponente, insbesondere der Kältemittelverdampfer, derart im Klimagerät-Gehäuse angeordnet, dass eine durch die Stirnwand definierte Stirnwandebene die klimatechnische Komponente schneidet. Der Bauraum im Bereich der Stirnwand, d. h. typischerweise unterhalb der Instrumententafel des Fahrzeugs, ist damit besonders gut ausgenutzt. Das Klimagerät-Gehäuse, welches zusätzlich die Funktion eines Teiles der Stirnwand sowie eines Querträgers hat, erstreckt sich annähernd über die gesamte Breite der Stirnwand. Sowohl das Klimagerät-Gehäuse als auch der zur Aufnahme zumindest eines Teiles des Klimagerät-Gehäuses vorgesehene Stirnwand-Durchbruch sind damit großflächig ausgebildet, wobei die Höhe des Durchbruchs bevorzugt mindestens der Hälfte der Höhe des Klimagerät-Gehäuses entspricht. Im Übrigen ist eine Überlappung zwischen der Stirnwand und dem Klimagerät-Gehäuse gegeben, wodurch auf einfache Weise eine besonders stabile, festigkeitsübertragende Verbindung zwischen der Stirnwand und dem Klimagerät-Gehäuse hergestellt ist.

Das Klimagerät-Gehäuse weist vorzugsweise eine tragende, zur Aufnahme von klimatechnischen Komponenten vorgesehene Gitter- oder Wabenstruktur auf. Eine solche Struktur vereinigt die Vorteile eines geringen Gewichts und einer hohen Festigkeit mit der einfachen Möglichkeit einer gezielten Leitung von Luftströmen. In besonders bevorzugter Weise wird die Gitterstruktur durch ein Mehrkomponentenbauteil, insbesondere aus Metall und Kunststoff, gebildet. Alternativ ist die Gitterstruktur des Klimagerät-Gehäuses beispielsweise auch aus Kunststoff herstellbar. Besonders vorteilhaft ist in jedem Fall die Verwendung eines schwingungs- und schalldämmenden Absorbermaterials, insbesondere eines Kunststoff-Schaums. Beliebige Leitungen zur Energie- und/oder Medienversorgung sind problemlos in die Gitterstruktur integrierbar. Die großflächige, sich bevorzugt annähernd über die gesamte Stirnwandbreite erstreckende Gitterstruktur ist mit der Stirnwand derart verbunden, insbesondere verklebt oder verschraubt, dass die insbesondere bei einem Unfall relevante Festigkeit des Verbundteils aus Stirnwand und Klimagerät-Gehäuse im Vergleich zu einer Stirnwand ohne Durchbruch oder mit einem oder mehreren kleineren Durchbrüchen deutlich erhöht ist. Zugleich ist durch die Stirnwandintegration des Klimagerätes oder zumindest eines Teilgerätes der Klimaanlage im Vergleich zu einem gesonderten, an die Stirnwand angrenzenden oder von dieser beabstandeten Klimagerät zusätzlicher Bauraum im Innenraum des Fahrzeugs gewonnen.

Das Klimagerät-Gehäuse schließt in bevorzugter Ausgestaltung eine Mehrzahl klimatechnischer Komponenten, insbesondere mindestens ein dem Kältemittelverdampfer strömungstechnisch, bezogen auf den in den Fahrzeuginnenraum zu leitenden Luftstrom, nachgeschaltetes Heizelement, ein. In besonders bevorzugter Ausgestaltung ist innerhalb des Klimagerät-Gehäuses zusätzlich zum Heizelement ein beispielsweise elektrisch betriebenes Zusatzheizelement angeordnet. Beide Heizelemente oder Heizkörper sind hierbei vorzugsweise in montagefreundlicher und Raum sparender Weise direkt in der Gitterstruktur des Klimagerät-Gehäuses gehalten.

Der Vorteil der Erfindung liegt insbesondere darin, dass im Vergleich zu herkömmlichen, an der Stirnwand des Fahrzeugs befestigten Klimageräten das Gesamtgewicht der die Stirnwand und das Klimagerät-Gehäuse einschließenden Fahrzeug-Klimatisierungsvorrichtung bei erhöhter mechanischer Belastbarkeit, verbesserter Geräuschdämmung, Platz sparender Anordnung und rationeller Fertigungs- und Montagemöglichkeit wesentlich reduziert ist.

Ein Ausführungsbeispiel der Erfindung wird nachfolgend anhand einer Zeichnung näher erläutert. Hierin zeigen jeweils in schematischer Darstellung:
- Fig. 1: eine Fahrzeug-Klimatisierungsvorrichtung im Querschnitt, und
- Fig. 2: die Fahrzeug-Klimatisierungsvorrichtung in einer perspektivischen Ansicht.

Einander entsprechende Teile sind in beiden Figuren mit den gleichen Bezugszeichen versehen.

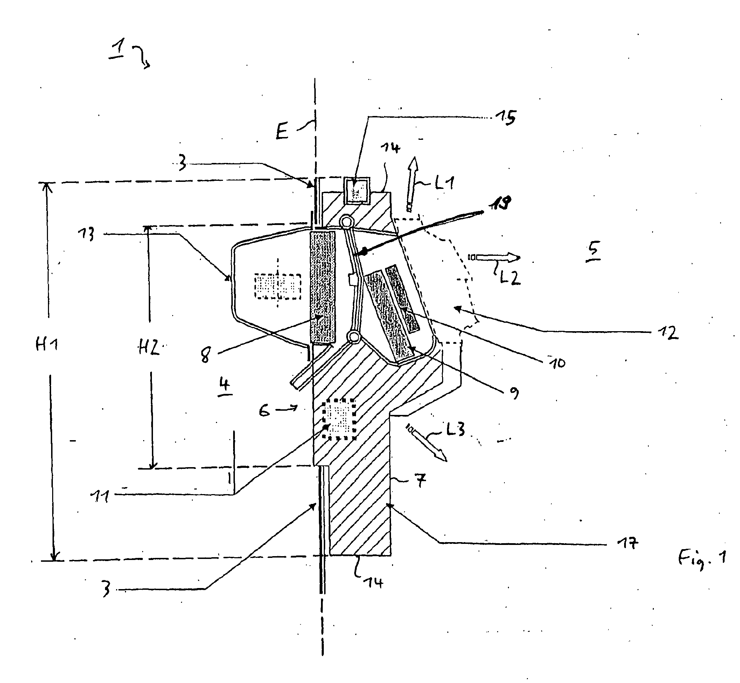

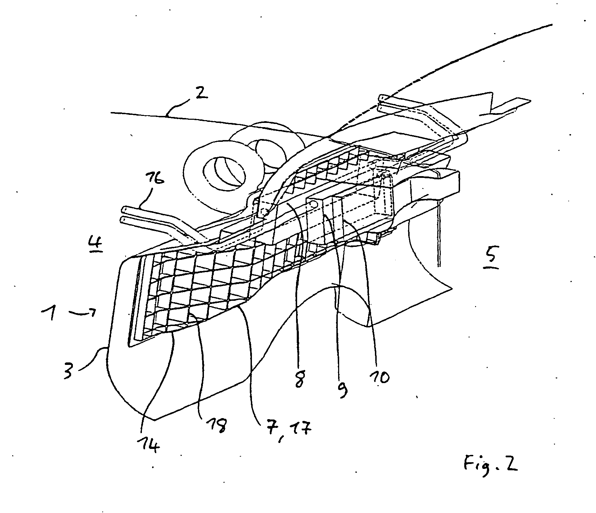

Die Fig. 1 und 2 zeigen in vereinfachter Darstellung eine Fahrzeug-Klimatisierungsvorrichtung 1 eines ausschnittsweise in Fig. 2 sichtbaren Personenkraftwagens 2. Eine Stirnwand 3 trennt einen Motorraum 4 des Kraftfahrzeugs 2 von einem Innenraum 5 des Kraftfahrzeugs 2. Der Begriff Motorraum wird hierbei unabhängig von der tatsächlichen Anordnung des Motors im Kraftfahrzeug 2 verwendet. Die Stirnwand 3 definiert eine Stirnwandebene E und weist einen Durchbruch 6 auf, welcher zur Aufnahme eines Klimagerät-Gehäuses 7 vorgesehen ist. Im Klimagerät-Gehäuse 7 sind ein Kältemittelverdampfer 8, ein durch Kühlwasser des Verbrennungsmotors des Kraftfahrzeugs 2 betriebener Heizkörper 9 sowie ein Zusatzheizkörper 10 angeordnet. Für weitere, beispielsweise elektrische und/oder kältetechnische Komponenten, ist ein Zusatzbauraum 11 innerhalb des Klimagerät-Gehäuses 7 vorgesehen. Eine Verteilerbox 12, welche Luftströme L1, L2, L3 im Innenraum 5 verteilt, ist lediglich gestrichelt angedeutet. Hierbei ist der Luftstrom L1 zur Entfrostung der Windschutzscheibe des Kraftfahrzeugs 2 vorgesehen und der Luftstrom L3 dem Fußraum zugeordnet. Auf der Seite des Motorraums 4 befindet sich ein Gebläse 13, welches zu temperierende, insbesondere zu kühlende Luft dem Kältemittelverdampfer 8 zuführt.

Das Klimagerät-Gehäuse ist in nicht näher dargestellter Weise, beispielsweise durch Verklebung, als tragendes Teil mechanisch mit der Stirnwand 3 verbunden und als Mehrkomponentenbauteil mit einer Gitterstruktur 14 ausgebildet. Die Gitterstruktur 14 weist durch die Verwendung geschäumter Kunststoffe, welche mit ansonsten aus Blechen gebildeten Wandungen 18 verbunden sind, besonders geräuschdämpfende Eigenschaften auf. Die Wandungen 18 der Gitterstruktur sind dabei normal zur Stirnwandebene E angeordnet. Hierdurch weist das aus der Stirnwand 3 und dem Klimagerät-Gehäuse 7 gebildete Verbundbauteil, welches im Kraftfahrzeug 2 gleichzeitig eine Querträgerfunktion übernimmt, eine besonders hohe Stabilität hinsichtlich Belastungen normal zur Stirnwand 3, etwa im Crash-Fall, auf.

Das hauptsächlich in Form der Gitterstruktur 14 ausgebildete, die klimatechnischen Komponenten 8, 9, 10 aufnehmende Klimagerät-Gehäuse 7 wird als vorgefertigtes Modul in das Kraftfahrzeug 2 eingebaut. Bei der Montage ist dabei insbesondere die geringe Teilezahl vorteilhaft. Zur weiteren Erhöhung der mechanischen Stabilität des Verbundes aus Stirnwand 3 und Klimagerät-Gehäuse 7 ist im oberen Bereich des Klimagerät-Gehäuses 7 ein Querträger 15 in Form eines rechteckigen Metallprofils angeordnet. Die Höhe des Klimagerät-Gehäuses 7 einschließlich des Querträgers 15 ist mit H1, die Höhe des Durchbruchs 6 mit H2 bezeichnet. Aus der großen Dimensionierung des Durchbruchs 6 ergibt sich eine erhebliche Material- und Gewichtseinsparung im Bereich der Stirnwand 3. Gleichzeitig ist durch den Ersatz eines Teils der Stirnwand 3 durch das Klimagerät-Gehäuse 7 die Stabilität der Stirnwand 3 bei erhöhter Geräuschdämmung verbessert. Bei ausreichend stabiler Ausbildung der Gitterstruktur 14 kann der Querträger 15 entfallen. Leitungen 16 zur Versorgung der klimatechnischen Komponenten 8, 9, 10 sind durch die Gitterstruktur 14 hindurch verlegt. Unterhalb der klimatechnischen Komponenten 8, 9, 10 ist die Gitterstruktur 14 als sich mit der Stirnwand 3 kraftübertragend überlappender Verstärkungsbereich 17 ausgebildet. Entsprechend der gesamten Klimatisierungsvorrichtung 1 ist auch der Verstärkungsbereich 17 Raum sparend im Kraftfahrzeug 2 angeordnet. Die Luftmischung erfolgt beispielsweise durch ein entsprechend ausgeführtes Rollband 19.

### Bezugszeichenliste

- 1: Fahrzeug-Klimatisierungsvorrichtung
- 2: Personenkraftwagen
- 3: Fahrzeug-Stirnwand
- 4: Motorraum
- 5: Innenraum
- 6: Durchbruch
- 7: Klimagerät-Gehäuse
- 8: Kältemittelverdampfer
- 9: Heizkörper
- 10: Zusatzheizkörper
- 11: Zusatzbauraum
- 12: Verteilerbox
- 13: Gebläse
- 14: Gitterstruktur
- 15: Querträger
- 16: Leitung
- 17: Verstärkungsbereich
- 18: Wandung
- 19: Rollband

- E: Stirnwandebene
- H1: Höhe des Klimagerät-Gehäuses
- H2: Höhe des Durchbruchs
- L1: Luftstrom
- L2: Luftstrom
- L3: Luftstrom

## Patentansprüche

1. Fahrzeug-Klimatisierungsvorrichtung (1) mit
● einer einen Durchbruch (6) aufweisenden Fahrzeug-Stirnwand (3),
● einem Klimagerät-Gehäuse (7), welches als tragendes Teil im Bereich des Durchbruchs (6) der Fahrzeug-Stirnwand (3) angeordnet ist,
**dadurch gekennzeichnet, dass** sich das Klimagerät-Gehäuse (7) über annähernd die gesamte Breite der Fahrzeug-Stirnwand (3) erstreckt.

2. Fahrzeug-Klimatisierungsvorrichtung nach Anspruch 1, **dadurch gekennzeichnet, dass** innerhalb des Klimagerät-Gehäuses (7) im Bereich des Durchbruchs (6) der Fahrzeug-Stirnwand (3) ein Kältemittelverdampfer (8) angeordnet ist.

3. Fahrzeug-Klimatisierungsvorrichtung nach einem der Ansprüche 1 bis 2, **dadurch gekennzeichnet, dass** der Durchbruch (6) eine Höhe (H2) aufweist, welche mindestens der Hälfte der Höhe (H1) des Klimagerät-Gehäuses (7) entspricht.

4. Fahrzeug-Klimatisierungsvorrichtung nach einem der Ansprüche 1 bis 3, **dadurch gekennzeichnet, dass** das Klimagerät-Gehäuse (7) eine tragende Gitterstruktur (14) aufweist.

5. Fahrzeug-Klimatisierungsvorrichtung nach Anspruch 4, **dadurch gekennzeichnet, dass** die Gitterstruktur (14) durch ein Mehrkomponentenbauteil gebildet ist.

6. Fahrzeug-Klimatisierungsvorrichtung nach einem der Ansprüche 1 bis 5, **gekennzeichnet durch** einen ins Klimagerät-Gehäuse (7) integrierten, zumindest im Wesentlichen parallel zur Fahrzeug-Stirnwand (3) angeordneten Querträger (15).

7. Fahrzeug-Klimatisierungsvorrichtung nach einem der Ansprüche 1 bis 6, **gekennzeichnet durch** einen im Klimagerät-Gehäuse (7) angeordneten Heizkörper (9).

8. Fahrzeug-Klimatisierungsvorrichtung nach Anspruch 7, **gekennzeichnet durch** einen dem Heizkörper (9) im Klimagerät-Gehäuse (7) nachgeschalteten Zusatzheizkörper (10).

9. Fahrzeug-Klimatisierungsvorrichtung einem der Ansprüche 1 bis 8, **dadurch gekennzeichnet, dass** die Luftmischung mittels eines Rollbandes (19) erfolgt.

10. Fahrzeug-Klimatisierungsvorrichtung nach einem der Ansprüche 1 bis 9, **gekennzeichnet durch** einen separaten Luftverteilungsaufsatz (12).

## Claims

1. Vehicle air-conditioning device (1) with
• a vehicle front wall (3) with an opening (6),
• an air-conditioning unit housing (7) arranged as a supporting component in the area of the opening (6) in the vehicle front wall (3),
**characterised in that**
the air-conditioning unit housing (7) extends over approximately the full width of the vehicle front wall (3).

2. Vehicle air-conditioning device according to Claim 1, **characterised in that** a coolant evaporator (8) is arranged inside the air-conditioning unit housing (7) in the area of the opening (6) in the vehicle front wall (3).

3. Vehicle air-conditioning device according to either of Claims 1 or 2, **characterised in that** the height (H2) of the opening (6) is at least half the height (H1) of the air-conditioning unit housing (7).

4. Vehicle air-conditioning device according to any of Claims I to 3, **characterised in that** the air-conditioning unit housing (7) has a supporting lattice structure (14).

5. Vehicle air-conditioning device according to Claim 4, **characterised in that** the lattice structure (14) consists of a multi-part component.

6. Vehicle air-conditioning device according to any of Claims 1 to 5, **characterised by** a cross-member (5) integrated in the air-conditioning unit housing (7) and arranged at least substantial parallel to the vehicle front wall (3).

7. Vehicle air-conditioning device according to any of Claims 1 to 6, **characterised by** a heating body (9) arranged in the air-conditioning unit housing (7).

8. Vehicle air-conditioning device according to Claim 7, **characterised by** an additional heating body (10) connected downstream from the heating body (9) in the air-conditioning unit housing (7).

9. Vehicle air-conditioning device according to any of Claims 1 to 8, **characterised in that** air mixing is carried out by a rolling strip (19).

10. Vehicle air-conditioning device according to any of Claims 1 to 9, **characterised by** a separate air distribution attachment (12).

## Revendications

1. Dispositif de climatisation (1) d'un véhicule, comprenant :
- un tablier de véhicule (3) présentant une ouverture (6),
- un boîtier de climatiseur (7) qui est disposé comme pièce porteuse dans la zone de l'ouverture (6) du tablier (3) du véhicule,
**caractérisé en ce que** le boîtier (7) du climatiseur s'étend sur presque toute la largeur du tablier (3) du véhicule.

2. Dispositif de climatisation d'un véhicule selon la revendication 1, **caractérisé en ce qu'**un évaporateur de fluide frigorigène (8) est disposé à l'intérieur du boîtier (7) du climatiseur, dans la zone de l'ouverture (6) du tablier (3) du véhicule.

3. Dispositif de climatisation d'un véhicule selon la revendication 1 ou 2, **caractérisé en ce que** l'ouverture (6) présente une hauteur (H2) qui correspond au moins à la moitié de la hauteur (H1) du boîtier (7) du climatiseur.

4. Dispositif de climatisation d'un véhicule selon l'une quelconque des revendications 1 à 3, **caractérisé en ce que** le boîtier (7) du climatiseur présente une structure portante (14) en forme de grille.

5. Dispositif de climatisation d'un véhicule selon la revendication 4, **caractérisé en ce que** la structure (14) en forme de grille est formée par une pièce de structure à plusieurs composants.

6. Dispositif de climatisation d'un véhicule selon l'une quelconque des revendications 1 à 5, **caractérisé par** une traverse (15) intégrée au boîtier (7) du climatiseur et disposée au moins pratiquement de façon parallèle au tablier (3) du véhicule.

7. Dispositif de climatisation d'un véhicule selon l'une quelconque des revendications 1 à 6, **caractérisé par** un radiateur (9) disposé dans le boîtier (7) du climatiseur.

8. Dispositif de climatisation d'un véhicule selon la revendication 7, **caractérisé par** un radiateur supplémentaire (10) monté dans le boîtier (7) du climatiseur, en aval du radiateur (9).

9. Dispositif de climatisation d'un véhicule selon l'une quelconque des revendications 1 à 8, **caractérisé en ce que** le mélange d'air est réalisé à l'aide d'une bande roulante (19).

10. Dispositif de climatisation d'un véhicule selon l'une quelconque des revendications 1 à 9, **caractérisé par** un élément rapporté de répartition d'air (12) monté séparément.
